# EUROPÄISCHE PATENTSCHRIFT

(11) **EP 3 042 472 B1**
(45) Veröffentlichungstag und Bekanntmachung des Hinweises auf die Patenterteilung: **31.05.2017**
(21) Anmeldenummer: 15781338.7
(22) Anmeldetag: 14.10.2015
(51) Int. Cl.: H04L 12/24, G06F 11/07, H04J 3/06, H04L 12/26

(54) **VERFAHREN ZUM ÜBERWACHEN EINES ERSTEN TEILNEHMERS IN EINEM KOMMUNIKATIONSNETZWERK UND ÜBERWACHUNGSSYSTEM**
METHOD FOR SUPERVISING A FIRST STATION IN A COMMUNICATION NETWORK AND SUPERVISING SYSTEM
PROCÉDÉ DE SURVEILLANCE D'UNE STATION DANS UN RÉSEAU DE COMMUNICATION ET SYSTÈME DE SURVEILLANCE

(30) Priorität: 14.10.2014 DE 102014114883
(43) Veröffentlichungstag der Anmeldung: 13.07.2016
(73) Patentinhaber: Beckhoff Automation GmbH, 33415 Verl (DE)
(72) Erfinder: ELLERBROCK, Oliver, 32602 Vlotho (DE); SACHS, Jens, 32469 Petershagen / Lahde (DE); ZUTZ, Robert, 33415 Verl / Kaunitz (DE)
(74) Vertreter: Patentanwaltskanzlei WILHELM & BECK
(86) Internationale Anmeldenummer: PCT/EP2015/073758
(87) Internationale Veröffentlichungsnummer: WO 2016/059100

(56) Entgegenhaltungen:
- WO-A1-2013/094072
- DE-A1- 10 361 178
- DE-A1-102008 007 672
- "Grundsatz für die Prüfung und Zertifizierung von Bussystemen für die Übertragung sicherheitsrelevanter Nachrichten", INTERNET CITATION, 31. Mai 2002 (2002-05-31), Seiten 1-34, XP002522879, Gefunden im Internet: URL:http://www.bgete.de/bilder/pdf/gs-et-2 6_a05-2002.pdf [gefunden am 2009-04-03]

## Beschreibung

Die Erfindung betrifft ein Verfahren zum Überwachen eines ersten Teilnehmers in einem Kommunikationsnetzwerk und ein Überwachungssystem.

Die DE 10 2012 023 748 A1 offenbart ein Verfahren zur Synchronisation von Sensoren, bei dem ein Takt eines Zeitmessers in den Sensoren mit einem Takt eines zentralen Zeitmessers in einem Steuergerät verglichen wird. Aus der DE 103 61 178 A1 ist ein Kommunikationsnetzwerk bekannt, beim die Teilnehmern ein Vergleich von Zeitversetzungen in zeitgestempelten Nachrichten ausführen. Die EP 2 648 100 A1 zeigt eine Vorrichtung zur Prozessüberwachung und ein Automatisierungsgerät mit einer solchen Vorrichtung.

Die DE10 2008 007672; A1 offenbart ein Verfahren zur Überwachung von Teilnehmer, bei dem ein Teilnehmer in einen Fehlerzustand versetzen wird, wenn die geschätzte Laufzeit zu hoch ist. Die WO 2013/094072 A2 offenbart ein CAN Kommunikationsnetzwerk, in dem Zeitdifferenzen ermittelt und miteinander verglichen werden, wobei abhängig von dem Vergleich wird eine Nachricht verworfen oder nicht.
Die der Erfindung zugrunde liegende Aufgabe kann darin gesehen werden, ein verbessertes Verfahren zum Überwachen eines ersten Teilnehmers, der eine sicherheitsgerichtete Applikation ausführt, in einem Kommunikationsnetzwerk bereitzustellen.

Die der Erfindung zugrunde liegende Aufgabe kann des Weiteren darin gesehen werden, ein verbessertes Überwachungssystem anzugeben.

Diese Aufgaben werden mittels des jeweiligen Gegenstands der unabhängigen Ansprüche gelöst. Vorteilhafte Ausgestaltungen der Erfindung sind Gegenstand von jeweils abhängigen Unteransprüchen.

Nach einem Aspekt wird ein Verfahren zum Überwachen eines ersten Teilnehmers eines Kommunikationsnetzwerks bereitgestellt, wobei:
- ein zweiter Teilnehmer des Kommunikationsnetzwerks zu zwei nacheinander folgenden Zeitpunkten jeweils einen auf einem internen Zeitgeber des zweiten Teilnehmers basierenden Zeitwert ermittelt und den jeweiligen ermittelten Zeitwert an den ersten Teilnehmer über das Kommunikationsnetzwerk sendet, wobei
- der erste Teilnehmer ansprechend auf einen jeweiligen Empfang der gesendeten Zeitwerte einen weiteren auf einem weiteren internen Zeitgeber des ersten Teilnehmers basierenden Zeitwert ermittelt, wobei
- der erste Teilnehmer eine Differenz zwischen den beiden Zeitwerten des zweiten Teilnehmers mit einer Differenz zwischen den beiden weiteren Zeitwerten des ersten Teilnehmers vergleicht,
- wobei der erste Teilnehmer abhängig von dem Vergleich in einen Fehlerzustand geht.

Gemäß einem weiteren Aspekt wird ein System zum Überwachen eines ersten Teilnehmers eines Kommunikationsnetzwerks bereitgestellt, umfassend:
- einen ersten Teilnehmer für das Kommunikationsnetzwerk und einen zweiten Teilnehmer für das Kommunikationsnetzwerk, wobei
- der zweite Teilnehmer einen internen Zeitgeber, zumindest einen Prozessor, der ausgebildet ist, basierend auf dem internen Zeitgeber einen Zeitwert zu ermitteln, und eine Kommunikationsschnittstelle umfasst, die ausgebildet ist, mittels des zumindest einen Prozessors zu zwei nacheinander folgenden Zeitpunkten ermittelte Zeitwerte an den ersten Teilnehmer über das Kommunikationsnetzwerk zu senden, wobei
- der erste Teilnehmer einen weiteren internen Zeitgeber und eine weitere Kommunikationsschnittstelle umfasst, die ausgebildet ist, die Zeitwerte des zweiten Teilnehmers über das Kommunikationsnetzwerk zu empfangen, wobei
- der erste Teilnehmer einen weiteren Prozessor aufweist, der ausgebildet ist, ansprechend auf einen jeweiligen Empfang der gesendeten Zeitwerte des zweiten Teilnehmers jeweils einen weiteren auf dem weiteren internen Zeitgeber basierenden Zeitwert zu ermitteln und eine Differenz zwischen den beiden Zeitwerten des zweiten Teilnehmers mit einer Differenz zwischen den beiden weiteren Zeitwerten des ersten Teilnehmers zu vergleichen, wobei
- der erste Teilnehmer ausgebildet ist, abhängig von dem Vergleich in einen Fehlerzustand zu gehen.

Nach einem Aspekt wird ein Teilnehmer für ein Kommunikationsnetzwerk bereitgestellt, umfassend:
- einen internen Zeitgeber,
- zumindest einen Prozessor, der ausgebildet ist, basierend auf dem internen Zeitgeber einen Zeitwert zu ermitteln, und
- eine Kommunikationsschnittstelle, die ausgebildet ist, mittels des zumindest einen Prozessors zu zwei nacheinander folgenden Zeitpunkten ermittelte Zeitwerte an einen weiteren Teilnehmer über das Kommunikationsnetzwerk zu senden.

Nach noch einem Aspekt wird ein Teilnehmer für ein Kommunikationsnetzwerk bereitgestellt, umfassend:
- einen internen Zeitgeber,
- eine Kommunikationsschnittstelle, die ausgebildet ist, Zeitwerte von einem weiteren Teilnehmer über das Kommunikationsnetzwerk zu empfangen, und
- einen Prozessor, der ausgebildet ist, ansprechend auf einen jeweiligen Empfang der Zeitwerte jeweils einen weiteren auf dem internen Zeitgeber basierenden Zeitwert zu ermitteln und eine Differenz zwischen den beiden aufeinanderfolgend empfangenen Zeitwerten mit einer Differenz zwischen den beiden aufeinanderfolgend ermittelten weiteren Zeitwerten zu vergleichen, wobei
- der Teilnehmer ausgebildet ist, abhängig von dem Vergleich in einen Fehlerzustand zu gehen.

Zur besseren Unterscheidung wird der Teilnehmer, welcher die Zeitwerte an den weiteren Teilnehmer über das Kommunikationsnetzwerk sendet, als der zweite Teilnehmer bezeichnet. Der Teilnehmer, welcher diese Zeitwerte empfängt, wird als der erste Teilnehmer bezeichnet. Für eine bessere Unterscheidbarkeit, zu wem der Zeitgeber die Kommunikationsschnittstelle und der Prozessor gehört, ist in der Beschreibung vorgesehen, dass der Zeitgeber, die Kommunikationsschnittstelle und der Prozessor des ersten Teilnehmers noch das Präfix "weitere" erhält.

Ausführungen, die im Zusammenhang mit dem Verfahren gemacht werden, gelten in analoger Weise auch für das System und für die Teilnehmer. Das heißt, dass sich Merkmale, Vorteile und Ausführungsformen hinsichtlich des Verfahrens in analoger Weise aus den entsprechenden Ausführungsformen hinsichtlich des Systems oder der Teilnehmer ergeben und umgekehrt.

Die Erfindung umfasst also insbesondere den Gedanken, dass ein zweiter Teilnehmer des Kommunikationsnetzwerks zu zwei nacheinander folgenden Zeitpunkten ermittelte Zeitwerte über das Kommunikationsnetzwerk an den ersten Teilnehmer sendet. Dieser bildet eine Differenz dieser beiden Zeitwerte, also ein Delta (Δ). Der erste Teilnehmer ermittelt des Weiteren selbst weitere Zeitwerte, wobei diese den jeweiligen Empfangszeitpunkten der gesendeten Zeitwerte des zweiten Teilnehmers zugeordnet sind. Auch hier bildet der erste Teilnehmer eine entsprechende Differenz, also ein Delta (Δ) aus den von ihm ermittelten Zeitwerten. Der erste Teilnehmer vergleicht diese beiden Differenzen. Abhängig von dem Vergleich geht der erste Teilnehmer in einen Fehlerzustand.

Da die ermittelten Zeitwerte auf dem internen Zeitgeber des ersten und des zweiten Teilnehmers basieren, ist über den Vergleich der entsprechenden Differenzen der Zeitwerte in vorteilhafter Weise eine Überprüfung dahingehend ermöglicht, ob die beiden internen Zeitgeber der beiden Teilnehmer synchron laufen, oder ob der weitere interne Zeitgeber des ersten Teilnehmers schneller oder langsamer läuft bezogen auf den internen Zeitgeber des zweiten Teilnehmers. Es ist somit in vorteilhafter Weise eine Überwachung des internen Zeitgebers des ersten Teilnehmers ermöglicht. Dies allein dadurch, dass der zweite Teilnehmer Zeitwerte an den ersten Teilnehmer übermittelt, die auf seinem internen Zeitgeber basieren. Das heißt also insbesondere, dass für die Überprüfung des weiteren internen Zeitgebers des ersten Teilnehmers das Kommunikationsnetzwerk keine zusätzliche separate externe Masterclock, also kein separater externer Zeitgeber, umfassen muss. Es wird hierfür stattdessen der interne Zeitgeber des zweiten Teilnehmers verwendet. Dadurch, dass entsprechende Differenzen miteinander verglichen werden, ist es in vorteilhafter Weise nicht mehr notwendig, dass absolute Zeitwerte übermittelt werden müssen. Der gesendete Zeitwert muss also kein absolutes Datum umfassen. Dies reduziert ein entsprechendes zu sendendes Datenvolumen.

Der zu einem Zeitpunkt ermittelte Zeitwert entspricht insbesondere einem Zählerstand, der basierend auf dem internen Zeitgeber des ersten respektive zweiten Teilnehmers hoch- respektive heruntergezählt wird. Das heißt also insbesondere, dass der zweite Teilnehmer zu zwei nacheinander folgenden Zeitpunkten einen entsprechenden Zählerstand ermittelt und diese Zählerstände dann an den ersten Teilnehmer sendet. Der erste Teilnehmer ermittelt zu den entsprechenden Empfangszeitpunkten dieser Zählerwerte oder Zählerstände selbst einen internen Zählerstand eines weiteren internen Zählers des ersten Teilnehmers, der basierend auf dem weiteren internen Zeitgeber hoch- respektive heruntergezählt wird. Zum Hoch- respektive Herunterzählen geben die entsprechenden Zeitgeber einen Takt vor, beispielsweise einen Millisekunden-Takt.

Wenn die beiden internen Zeitgeber der beiden Teilnehmer synchron zueinander laufen, so sollten die beiden Zähler im Rahmen einer Fehlergenauigkeit oder Messtoleranzen oder Systemgenauigkeiten gleich viel hochgezählt oder heruntergezählt worden sein. Sofern die beiden Differenzen sich aber um einen vorgegebenen Schwellwert unterscheiden, wird davon ausgegangen, dass die beiden internen Zeitgeber nicht mehr synchron zueinander laufen, einer läuft schneller respektive langsamer als der andere. In diesem Fall ist dann insbesondere vorgesehen, dass der erste Teilnehmer in einen Fehlerzustand geht. Dieser vorgegebene Schwellwert ist beispielsweise abhängig vom konkreten Anwendungsfall.

Der Schwellwert für das Auslösen des Fehlerzustandes ist nach einer Ausführungsform abhängig von einer zeitlichen Auflösung der beiden internen Zeitgeber. Vorzugsweise wird zum Ermitteln des Schwellwerts die kleinste gemeinsame zeitliche Einheit der beiden internen Zeitgeber verwendet, wie zum Beispiel 1ms, insbesondere 10ms oder auch vorzugsweise 100ms, wobei die kleinste gemeinsame zeitliche Einheit um einen Prozentwert, zum Beispiel um 20%, insbesondere um 30 %, erhöht wird. Die kleinste zeitliche Einheit wird also mit einem Sicherheitszeitzuschlag beaufschlagt. Die erhöhte gemeinsame zeitliche Einheit bildet den Schwellwert. Weicht die Differenz zweier aufeinanderfolgender Timerwerte oder Zeitwerte um mehr als die mittels des Prozentwerts erhöhte kleinste zeitliche Einheit, also zum Beispiel um mehr als 20%, ab, so wird der Fehlerzustand eingenommen, der erste Teilnehmer geht also in einen Fehlerzustand.

Nach einer Ausführungsform ist vorgesehen, dass die Zeitwerte des zweiten Teilnehmers in einem vorgegebenen zeitlichen Abstand zu entsprechenden Sendezeitpunkten der Zeitwerte ermittelt werden. Dadurch wird insbesondere der technische Vorteil bewirkt, dass ein Jitter bei der Timergenerierung möglichst gering gehalten werden kann. Denn es wird bis zu dem vorgegebenen zeitlichen Abstand vor der Übermittlung des Zeitwertes gewartet, wobei dann der aktuelle Zeitwert oder Zählerstand des Zählers verwendet wird. Der vorgegebene zeitliche Abstand liegt insbesondere im Mikrosekundenbereich, insbesondere in einem Bereich von 1 µs bis 1000 µs, beispielsweise zwischen 1 µs und 500 µs, insbesondere zwischen 1 µs und 100 µs, vorzugsweise zwischen 1 µs und 10 µs.

In einer anderen Ausführungsform ist vorgesehen, dass der zweite Teilnehmer zweikanalig und der erste Teilnehmer einkanalig gebildet sind. Dadurch wird insbesondere der technische Vorteil bewirkt, dass bei dem zweiten Teilnehmer eine erhöhte Wahrscheinlichkeit dafür gegeben ist, dass der zweite Teilnehmer interne Fehler oder Fehlfunktionen bei sich detektiert. Dies aufgrund der Zweikanaligkeit. Insbesondere ist eine erhöhte Redundanz und Ausfallsicherheit gegeben bei dem zweiten Teilnehmer. Da der zweite Teilnehmer bereits zweikanalig ausgebildet ist, muss dies nicht mehr notwendigerweise auch für den ersten Teilnehmer gelten. Es reicht hier, dass dieser einkanalig ausgebildet ist. Dies vereinfacht einen entsprechenden Systemaufbau. Insbesondere kann der erste Teilnehmer kostengünstiger hergestellt werden. Beispielsweise kann dieser als ein üblicher "personal computer" (PC) gebildet sein. Insbesondere umfasst der zweite Teilnehmer zwei Prozessoren, insbesondere zwei Mikroprozessoren, zum Beispiel zwei Mikrocontroller. Hingegen weist der erste Teilnehmer vorzugsweise einen einzigen Prozessor auf. Die beiden Prozessoren des zweiten Teilnehmers sind also insbesondere ausgebildet, sich gegenseitig auf Fehlfunktionen zu überwachen. Sofern einer der Prozessoren eine Fehlfunktion aufweist, kann immer noch der andere Prozessor des zweiten Teilnehmers Aufgaben des ersten Prozessors übernehmen. Beide Prozessoren sind insbesondere ausgebildet, die entsprechenden Timer- oder Zeitwerte zu ermitteln.

In einer anderen Ausführungsform ist vorgesehen, dass das Senden der Zeitwerte auf dem Safety-over-EtherCAT-Protokoll basiert. Dadurch wird insbesondere der technische Vorteil bewirkt, dass die Übertragung der Zeitwerte auf einem sicheren Protokoll basiert, das insbesondere SIL3-zertifiziert ist. Hierbei steht die Abkürzung SIL für Sicherheitsintegritätslevel. Safety over EtherCAT ist in IEC 61784-3-12 international genormt.

Gemäß einer weiteren Ausführungsform ist vorgesehen, dass der zweite Teilnehmer unabhängig von einem einem an den zweiten Teilnehmer angeschlossenen elektronischen Modul zugeordneten Modulfehler die Zeitwerte an den ersten Teilnehmer sendet. Dadurch wird insbesondere der technische Vorteil bewirkt, dass der zweite Teilnehmer auch im Fall eines Modulfehlers die Zeitwerte an den ersten Teilnehmer sendet. Dieser kann also auch im Modulfehlerfall seinen internen Zeitgeber basierend auf den gesendeten Zeitwerten des zweiten Teilnehmers überprüfen. Somit wird in vorteilhafter Weise sichergestellt, dass auch im Modulfehlerfall eine Überwachung des ersten Teilnehmers ermöglicht ist.

Ein elektronisches Modul ist beispielsweise ein Aktor oder ein Sensor, welcher an den zweiten Teilnehmer angeschlossen ist. Das heißt, dass der zweite Teilnehmer den Sensor ausliest oder den Aktor steuert. Wenn bei der Steuerung oder bei dem Auslesen beispielsweise ein Fehler auftritt, so wird dies als ein Modulfehler bezeichnet. Insbesondere wenn der Sensor oder der Aktor eine Fehlfunktion aufweisen, so wird auch dies insbesondere als ein Modulfehler bezeichnet. Das heißt also, dass bei einem beliebigen Fehler in dem elektronischen Modul oder beim Auftreten eines Fehlers bei einer Ansteuerung oder einem Auslesen des elektronischen Moduls, dies keinen Einfluss auf das Ermitteln der Zeitwerte hat und auch nicht auf das Senden dieser Zeitwerte. Das heißt, dass der zweite Teilnehmer unabhängig von solchen Fehlern entsprechende Zeitwerte ermittelt oder generiert und diese über das Kommunikationsnetzwerk an den ersten Teilnehmer sendet. Ein Modulfehler kann beispielsweise ein Fehler in einer externen Verdrahtung des Moduls umfassen. Der Zeitwert wird also insbesondere unabhängig von solchen Modulfehlern weiterhin generiert. Modulfehler können nach einer Ausführungsform mittels einer Eingangs- und/oder einer Ausgangsklemme eines Bus-Klemmsystems detektiert werden, wobei die Klemmen Teilnehmer des Kommunikationsnetzwerks sind.

Nach einer Ausführungsform ist das Kommunikationsnetzwerk ein EtherCAT-Kommunikationsnetzwerk. Allgemein ist nach einer Ausführungsform vorgesehen, dass das Kommunikationsnetzwerk ein Feldbus-Kommunikationsnetzwerk ist, insbesondere ein Profibus oder ein Profinet-Kommunikationssystem.

Nach einer Ausführungsform ist ein Automatisierungssystem vorgesehen, welches das erfindungsgemäße System umfasst. Das Automatisierungssystem ist beispielsweise Teil einer Fertigungsanlage, insbesondere einer industriellen Fertigungsanlage. Das Automatisierungssystem ist beispielsweise Teil eines Hausautomationssystems.

Nach einer Ausführungsform ist vorgesehen, dass auf dem ersten Teilnehmer eine sicherheitsgerichtete Applikation ausgeführt wird respektive dass der erste Teilnehmer, insbesondere der weitere Prozessor, ausgebildet ist, eine sicherheitsgerichtete Applikation auszuführen. Dies insbesondere basierend auf dem weiteren internen Zeitgeber des ersten Teilnehmers. Das heißt also insbesondere, dass der weitere interne Zeitgeber des ersten Teilnehmers einen Zeittakt für das Abarbeiten oder Ausführen der sicherheitsgerichteten Applikation übernimmt. Hier ist es besonders wichtig, dass der weitere interne Zeitgeber des ersten Teilnehmers korrekt arbeitet, also weder zu langsam noch zu schnell läuft. Denn dies ist besonders wichtig für ein zeitliches Verhalten von Einschalt- bzw. Ausschalterverzögerungen, die in sicherheitsgerichteten Applikationen häufig zum Einsatz kommen. Durch den erfindungsgemäßen Vergleich der Zeitwerte (also hier der Vergleich der entsprechenden Differenzen) kann in vorteilhafter Weise sichergestellt werden, dass der interne Zeitgeber des ersten Teilnehmers sich nicht unzulässig verlangsamt oder beschleunigt, was dazu führen könnte, dass die sicherheitsgerichtete Applikation, die auf dem ersten Teilnehmer ausgeführt wird, nicht mehr korrekt abgearbeitet werden kann.

Dass der erste Teilnehmer ausgebildet ist, abhängig von dem Vergleich in einen Fehlerzustand zu gehen, umfasst insbesondere den Fall, dass der weitere Prozessor des ersten Teilnehmers ausgebildet ist, abhängig von dem Vergleich in einen Fehlerzustand zu gehen.

Der Fehlerzustand bedeutet beispielsweise, dass die Abarbeitung der sicheren Applikation auf dem Teilnehmer gestoppt wird, wobei beispielsweise auch die Kommunikation zu den externen Teilnehmern unterbrochen wird, so dass diese nach einer einstellbaren Watchdogzeit ebenfalls in den sicheren Zustand wechseln und die Ausgänge abschalten.

Die Schritte des Ermittelns des Zeitwerts, des Senden des Zeitwerts an den ersten Teilnehmer und das Ermitteln eines weiteren Zeitwerts mittels des ersten Teilnehmers ansprechend auf dem Empfang werden nach einer Ausführungsform zyklisch nacheinander durchgeführt. Insbesondere entspricht hier der Zyklus einem Datenübertragungszyklus des Kommunikationsnetzwerks. Der zu sendende Zeitwert oder Zählerstand wird nach einer Ausführungsform in ein Telegramm gepackt oder eingefügt, welches gemäß dem Übertragungszyklus über das Kommunikationsnetzwerk an den ersten Teilnehmer gesendet wird. Es ist vorzugsweise vorgesehen, dass mit dem Ermitteln des Zählerstandes oder Zeitwerts bis zu einem vorgegebenen zeitlichen Abstand einer Telegrammübermittlung gewartet wird, sodass in vorteilhafter Weise ein möglichst aktueller Zählerstand an den ersten Teilnehmer gesendet werden kann. Der vorgegebene zeitliche Abstand liegt beispielsweise im Mikrosekundenbereich. Dadurch ist insbesondere der technische Vorteil bewirkt, dass bei der Generierung oder Ermittlung des Zeitwerts oder des Zählerstandes ein Jitter möglichst gering gehalten werden kann.

Die Erfindung wird im Folgenden anhand von bevorzugten Ausführungsbeispielen näher erläutert. Hierbei zeigen
Fig. 1 ein Ablaufdiagramm eines Verfahrens zum Überwachen eines ersten Teilnehmers eines Kommunikationsnetzwerks,
Fig. 2 ein System zum Überwachen eines ersten Teilnehmers eines Kommunikationsnetzwerks,
Fig. 3 einen Teilnehmer für ein Kommunikationsnetzwerk und
Fig. 4 einen weiteren Teilnehmer für ein Kommunikationsnetzwerk.

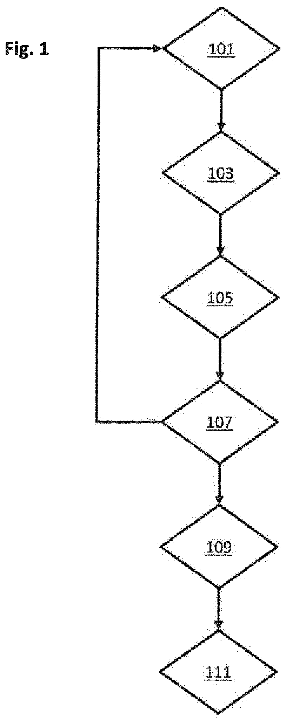

Fig. 1 zeigt ein Ablaufdiagramm eines Verfahrens zum Überwachen eines ersten Teilnehmers eines Kommunikationsnetzwerks.

Gemäß einem Schritt 101 ermittelt ein zweiter Teilnehmer des Kommunikationsnetzwerks zu einem ersten Zeitpunkt einen auf einem internen Zeitgeber des zweiten Teilnehmers basierenden Zeitwert. Dieser Zeitwert entspricht beispielsweise einem Zählerstand eines internen Zählers des zweiten Teilnehmers, wobei der interne Zähler entsprechend dem vom internen Zeitgeber vorgegebenen Takt hoch- respektive heruntergezählt wird.

In einem Schritt 103 sendet der zweite Teilnehmer den ermittelten Zeitwert, also beispielsweise den Zählerstand zu dem ersten Zeitpunkt, über das Kommunikationsnetzwerk an den ersten Teilnehmer. In einem Schritt 105 empfängt der erste Teilnehmer diesen Zeitwert, wobei ansprechend auf den Empfang der erste Teilnehmer gemäß einem Schritt 107 einen weiteren Zeitwert ermittelt. Dies basierend auf einem weiteren internen Zeitgeber des ersten Teilnehmers. Auch dieser weitere Zeitwert entspricht beispielsweise einem Zählerstand eines internen Zählers des ersten Teilnehmers zum Zeitpunkt des Empfangs des Zeitwerts des zweiten Teilnehmers gemäß dem Schritt 105. Dieser interne Zähler wird basierend auf dem weiteren internen Zeitgeber hoch- respektive heruntergezählt.

Die Schritte 101 bis 107 werden zyklisch nacheinander durchgeführt. Insbesondere entspricht hier der Zyklus einem Datenübertragungszyklus des Kommunikationsnetzwerks. Der zu sendende Zeitwert oder Zählerstand wird in ein Telegramm gepackt oder eingefügt, welches gemäß dem Übertragungszyklus über das Kommunikationsnetzwerk an den ersten Teilnehmer gesendet wird. Es ist vorzugsweise vorgesehen, dass mit dem Ermitteln des Zählerstandes bis zu einem vorgegebenen zeitlichen Abstand einer Telegrammübermittlung gewartet wird, sodass in vorteilhafter Weise ein möglichst aktueller Zählerstand an den ersten Teilnehmer gesendet werden kann. Der vorgegebene zeitliche Abstand liegt beispielsweise im Mikrosekundenbereich. Dadurch ist insbesondere der technische Vorteil bewirkt, dass bei der Generierung oder Ermittlung des Zeitwerts oder des Zählerstandes ein Jitter möglichst gering gehalten werden kann.

Nachdem die Schritte 101 bis 107 zweimal durchgeführt wurden, liegen dem ersten Teilnehmer insofern zwei Zeitwerte oder Zählerstände des zweiten Teilnehmers vor, die zu zwei nacheinander folgenden Zeitpunkten ermittelt wurden. Des Weiteren liegen dem ersten Teilnehmer auch zwei weitere Zeitwerte oder Zählerstände vor, die denjenigen Zählerständen zu den entsprechenden Empfangszeitpunkten entsprechen. In einem Schritt 109 findet ein Vergleich seitens des ersten Teilnehmers einer Differenz zwischen den beiden Zeitwerten des zweiten Teilnehmers mit einer Differenz zwischen den beiden weiteren Zeitwerten des ersten Teilnehmers statt. Das heißt also, dass der erste Teilnehmer eine Differenz zwischen den beiden Zeitwerten des zweiten Teilnehmers bildet. Der erste Teilnehmer bildet ferner eine Differenz zwischen den beiden weiteren Zeitwerten des ersten Teilnehmers. Diese beiden Differenzen werden miteinander verglichen. Im Idealfall sollten die beiden Differenzen gleich sein, wenn die beiden internen Zeitgeber der beiden Teilnehmer synchron zueinander laufen. Wenn hingegen der weitere interne Zeitgeber des ersten Teilnehmers schneller oder langsamer läuft als der interne Zeitgeber des zweiten Teilnehmers, so sind die jeweiligen Differenzen unterschiedlich. Sollte dieser Unterschied größer als ein vorbestimmter Schwellwert sein, ist gemäß dem Schritt 111 vorgesehen, dass der erste Teilnehmer in einen Fehlerzustand geht. Dieser Schwellwert hängt insbesondere vom konkreten Anwendungsfall ab und muss insbesondere Parameter wie zum Beispiel eine Übertragungsgeschwindigkeit, eine Übertragungsstrecke und einen Jitter berücksichtigen. Daher der Schwellwert, da der Idealfall in einer realen Umgebung üblicherweise selten vorkommt.

Mittels des erfindungsgemäßen Verfahrens ist es also in vorteilhafter Weise ermöglicht, dass ein zweiter Teilnehmer des Kommunikationsnetzwerks den ersten Teilnehmer dahingehend überwachen kann, dass der interne Zeitgeber des ersten Teilnehmers nicht schneller oder langsamer läuft als der interne Zeitgeber des zweiten Teilnehmers. Dies ist insbesondere dann von besonderer Wichtigkeit und von besonderem Vorteil, wenn auf dem ersten Teilnehmer eine sicherheitsgerichtete Applikation abgearbeitet wird, wobei das Abarbeiten basierend auf einem mittels des weiteren internen Zeitgebers vorgegebenen Takt durchgeführt wird. Solches Abarbeiten kann beispielsweise ein Einschalten oder ein Abschalten von bestimmten Aktoren oder Stellern sein, die basierend auf der sicherheitsgerichteten Applikation gesteuert werden. Dadurch, dass der Zeitgeber des zweiten Teilnehmers für die Synchronüberwachung des Zeitgebers des ersten Teilnehmers verwendet wird, ist es in vorteilhafter Weise nicht mehr notwendig, dass ein getrennt von den beiden Teilnehmern gebildeter Masterzeitgeber oder Hauptzeitgeber vorgesehen ist. Dadurch, dass hier entsprechende Differenzen verglichen werden, müssen also nicht mehr absolute Zeitinformationen über das Kommunikationsnetzwerk übertragen werden. Dies reduziert ein entsprechendes Datenvolumen.

In einer nicht gezeigten Ausführungsform ist vorgesehen, dass das Kommunikationsnetzwerk ein Feldbus-Kommunikationsnetzwerk ist. Bei dem Feldbus handelt es sich beispielsweise um einen EtherCAT-Feldbus. Das Protokoll, welches verwendet wird, um die Zeitwerte über das Kommunikationsnetzwerk an den ersten Teilnehmer zu senden, ist beispielsweise ein Safety-over-EtherCAT-Protokoll. Dies weist insbesondere den Vorteil auf, dass es sich hierbei um ein SIL3-zertifiziertes Protokoll, also um ein sicheres Protokoll, handelt. Allgemein ist vorgesehen, dass nach einer Ausführungsform die Kommunikation über das Kommunikationsnetzwerk basierend auf dem Safety-over-EtherCAT-Protokoll durchgeführt wird.

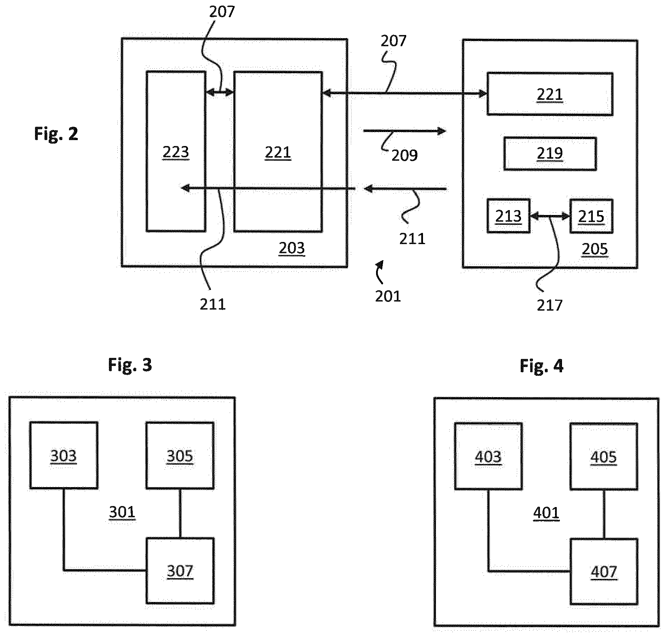

Fig. 2 zeigt ein System 201 zum Überwachen eines ersten Teilnehmers eines Kommunikationsnetzwerks.

Das System 201 umfasst einen ersten Teilnehmer 203 und einen zweiten Teilnehmer 205. Für die Kommunikation über das Kommunikationsnetzwerk 207, welches beispielsweise ein Feldbus-Kommunikationsnetzwerk ist, umfassen die beiden Teilnehmer 203, 205 jeweils eine hier nicht dargestellte Kommunikationsschnittstelle. Die Kommunikation zwischen den beiden Teilnehmern 203, 205 wird basierend auf einem sicheren Protokoll, hier beispielsweise basierend auf dem Safety-over-EtherCAT-Protokoll, durchgeführt. Das Bezugszeichen 209 zeigt auf einen Pfeil, der symbolisch einen Datentransfer von dem ersten Teilnehmer 203 über den Feldbus 207 an den zweiten Teilnehmer 205 zeigt. Analog zeigt das Bezugszeichen 211 auf einen Pfeil, der symbolisch eine Datenübertragung von dem zweiten Teilnehmer 205 über den Feldbus 207 an den ersten Teilnehmer 203 darstellen soll. Diese Datenübertragung 211 überträgt sowohl Daten, zum Beispiel Nutzdaten, als auch Zeitwerte oder Zählerstände, die der zweite Teilnehmer 205, wie im Rahmen dieser Beschreibung bereits erläutert, ermittelt hat.

Der zweite Teilnehmer 205 ist zweikanalig gebildet. Das heißt, dass der zweite Teilnehmer 205 zwei Prozessoren 213, 215 umfasst, die beispielsweise als Mikroprozessoren oder Mikrocontroller ausgebildet sein können. Ferner umfasst der zweite Teilnehmer 205 einen internen Zeitgeber 219. Der interne Zeitgeber 219 ist beispielsweise ein Millisekundenzeitgeber. Der interne Zeitgeber 219 gibt einen Takt vor, beispielsweise einen Millisekundentakt, basierend auf welchem ein hier nicht dargestellter Zähler hochrespektive heruntergezählt wird. Zu nacheinander folgenden Zeitpunkten wird der jeweilige Zählerstand über den Feldbus 207 gemäß der Datenübertragung 211 an den ersten Teilnehmer 203 gesendet. Dies über ein sicheres Protokoll 221, welches hier beispielsweise das Safety-over-EtherCAT-Protokoll ist. Es ist vorzugsweise vorgesehen, dass mit dem Ermitteln des entsprechenden Zählerstandes bis zu einem vorgegebenen zeitlichen Abstand zu dem Zeitpunkt der Datenübertragung oder Telegrammübermittlung 211 gewartet wird. Somit wird für das Senden an den ersten Teilnehmer 203 in vorteilhafter Weise ein möglichst aktueller Zählerstand verwendet.

Der erste Teilnehmer 203 empfängt diese Zählerstände nacheinander und ermittelt ansprechend auf einen jeweiligen Empfang einen Zählerstand eines internen Zählers (nicht gezeigt) des ersten Teilnehmers 203, wobei dieser interne Zähler basierend auf einem hier nicht dargestellten weiteren internen Zeitgeber des ersten Teilnehmers 203 hochrespektive heruntergezählt wird. Dieser weitere interne Zeitgeber des ersten Teilnehmers 203 soll einen gleichen Takt vorgeben wie der interne Zeitgeber 219 des zweiten Teilnehmers 205 oder ist zu diesem proportional. Das heißt also, dass zumindest eine definierte Beziehung zwischen den entsprechenden Takten gegeben sein soll.

Um nun festzustellen, ob der Takt des weiteren internen Zeitgebers des ersten Teilnehmers 203 schneller oder langsamer läuft als der Takt des internen Zeitgebers 219 des zweiten Teilnehmers 205 ist erfindungsgemäß vorgesehen, dass ein Prozessor 223 des ersten Teilnehmers 203 entsprechende Differenzen der entsprechenden Zeitwerte oder Zählerstände bildet und diese Differenzen miteinander vergleicht. Sollten die Differenzen einen Unterschied aufweisen, der größer ist als ein vorgegebener Schwellwert, so geht der Prozessor 223 und somit auch der Teilnehmer 203 in einen Fehlerzustand. Der erste Teilnehmer 203 ist einkanalig aufgebaut, insofern er einen einzigen Prozessor 223 aufweist, der aber in nicht gezeigten Ausführungsformen ganz allgemein losgelöst von diesem konkreten Ausführungsbeispiel durchaus mehrere Kerne aufweisen kann.

Fig. 3 zeigt einen Teilnehmer 301 für ein Kommunikationsnetzwerk. Bei dem Teilnehmer 301 handelt es sich um eine Ausführungsform eines zweiten Teilnehmers für das Kommunikationsnetzwerk.

Allgemein umfasst ein solcher Teilnehmer 301 eine Kommunikationsschnittstelle 303, einen internen Zeitgeber 305 sowie einen Prozessor 307. Der interne Zeitgeber 305 gibt einen Takt vor. Der Prozessor 307 ist ausgebildet, basierend auf dem internen Zeitgeber, einen Zeitwert zu ermitteln. Die Kommunikationsschnittstelle 303 ist ausgebildet, mittels des Prozessors 307 zu zwei nacheinander folgenden Zeitpunkten ermittelte Zeitwerte an einen weiteren Teilnehmer, zum Beispiel an den ersten Teilnehmer des Kommunikationsnetzwerks, beispielsweise den Teilnehmer 203 gemäß Fig. 2, über das Kommunikationsnetzwerk zu senden.

Fig. 4 zeigt einen weiteren Teilnehmer 401 für ein Kommunikationsnetzwerk. Bei dem Teilnehmer 401 gemäß Fig. 4 handelt es sich um einen ersten Teilnehmer im Sinne dieser Beschreibung. Beispielsweise handelt es sich bei dem Teilnehmer 401 um den Teilnehmer 203 der Fig. 2.

Allgemein ist ein solcher Teilnehmer 401 wie folgt ausgebildet. Er umfasst eine Kommunikationsschnittstelle 403, die zur Unterscheidung der Kommunikationsschnittstelle des zweiten Teilnehmers 301 gemäß Fig. 3 als eine weitere Kommunikationsschnittstelle bezeichnet werden kann.

Der Teilnehmer 401 umfasst ferner einen internen Zeitgeber 405, der auch als ein weiterer interner Zeitgeber bezeichnet werden kann, um diesen besser von dem internen Zeitgeber 305 des Teilnehmers 301 unterscheiden zu können.

Der Teilnehmer 401 umfasst ferner einen Prozessor 407, der zur Unterscheidung des Prozessors 307 auch als ein weiterer Prozessor bezeichnet werden kann.

Die weitere Kommunikationsschnittstelle 403 ist ausgebildet, Zeitwerte von einem weiteren Teilnehmer, beispielsweise von dem Teilnehmer 301, über das Kommunikationsnetzwerk zu empfangen. Der Prozessor 407 ist ausgebildet, ansprechend auf einen jeweiligen Empfang der Zeitwerte jeweils einen weiteren auf dem internen Zeitgeber 405 basierenden Zeitwert zu ermitteln und eine Differenz zwischen den beiden empfangenen Zeitwerten mit einer Differenz zwischen den beiden weiteren Zeitwerten zu vergleichen. Der Teilnehmer 401, insbesondere der Prozessor 407, ist ausgebildet, abhängig von dem Vergleich in einen Fehlerzustand zu gehen.

Die Erfindung umfasst also insbesondere den Gedanken, ein Verfahren bereitzustellen, mit welchem ein einkanaliges sicheres System (erster Teilnehmer) durch Übermittlung von Timerwerten (Zeitwerten oder Zählerständen) von einem zweikanaligen sicheren System (zweiter Teilnehmer) überwacht werden kann. Es ist insbesondere vorgesehen, dass über ein Safety-Protokoll (hier FSoE, Safety-over-EtherCAT) Daten zwischen einem PC mit installierter PC-basierter Safety Runtime (erster Teilnehmer) und einem sicherheitsgerichteten Gerät (zweiter Teilnehmer) auf eine sichere (SIL3) Art und Weise ausgetauscht werden. Für die Kommunikation zwischen diesen Geräten wird ein Feldbus (vorzugsweise auch Ethernet basierend) verwendet.

Über das sichere Protokoll werden zyklisch Daten zwischen den beiden Geräten ausgetauscht. Im Kanal vom Safety Device zum einkanaligen Device wird zusätzlich ein Timerwert übertragen. Dieser Timerwert wird von dem Safety Device, welches zweikanalig aufgebaut ist, erzeugt.

Die PC-basierte Safety Runtime hat einen eigenen Timer, welcher mit dem übermittelten Timerwert verglichen wird. Stellt diese CPU fest, dass die Timerwerte unzulässig auseinander laufen, geht die CPU in einen Fehlerzustand.

Dieser Vergleich der Timerwerte ist notwendig, um sicherzustellen, dass der Zeitgeber des einkanaligen Systems sich nicht unzulässig verlangsamt oder beschleunigt und somit die sicherheitsgerichtete Applikation, die darauf ausgeführt wird, nicht mehr korrekt abgearbeitet werden kann. Dies ist besonders wichtig für das zeitliche Verhalten von Einschalt- bzw. Ausschaltverzögerungen, die in sicherheitsgerichteten Applikationen häufig zum Einsatz kommen.

Die Funktion der Timergenerierung wird beispielsweise über die Definition des Prozessabbildes des Safety Devices aktiviert.

Der Timer wird über eine hochpriore Timertask auf einem der beiden µC (Microcontroller) des zweiten Teilnehmers generiert. Die beiden µC überwachen sich gegenseitig, sodass jede Fehlfunktion innerhalb der Hardware und/oder Software detektiert wird (SIL3). Der ermittelte Timerwert wird bei dem nächsten FSoE-Kommunikationszyklus in das sichere Protokoll verpackt und an das einkanalige System (erster Teilnehmer) übermittelt.

Um den Jitter bei der Timergenerierung möglichst gering zu halten, wird vorzugsweise bis kurz vor Telegrammübermittlung gewartet (vorgegebener zeitlicher Abstand) und dann der aktuelle Timerwert verwendet.

Die Timergenerierung wird vorzugsweise auch im Falle eines Modulfehlers auf dem Safety Device weiterhin durchgeführt.

Die Übermittlung erfolgt über ein sicheres Protokoll, hier zum Beispiel FSoE (IEC61784-3-12), welches SIL3-zertifiziert ist.

Diese Erfindung beschreibt also einen Timerwert (des zweiten Teilnehmers) der mit einer SIL3-Qualität einem einkanaligen sicheren System (erster Teilnehmer) zur Verfügung gestellt werden kann.

## Patentansprüche

1. Verfahren zum Überwachen eines ersten Teilnehmers (203, 401) in einem Kommunikationsnetzwerk (207) durch einen zweiten Teilnehmer (205, 301), wobei der erste Teilnehmer (203, 401) einkanalig ausgebildet und ausgelegt ist, eine sicherheitsgerichtete Applikation auszuführen, wobei der zweite Teilnehmer (205, 301) zweikanalig ausgebildet, und wobei eine Datenübertragung zwischen dem ersten Teilnehmer und dem zweiten Teilnehmer auf dem Kommunikationsnetzwerk (207)über ein Safety-Protokoll erfolgt, mit den Schritten:
- Ermitteln (101) zu zwei nacheinander folgenden Zeitpunkten jeweils einen auf einem internen Zeitgeber des zweikanaligen zweiten Teilnehmers (205, 301) basierenden Zeitwert (211) in dem zweikanaligen zweiten Teilnehmer und Senden (103) des jeweiligen ermittelten Zeitwertes (211) durch den zweikanaligen zweiten Teilnehmer an den einkanaligen ersten Teilnehmer (203, 401) über das Kommunikationsnetzwerk (207),
- Empfangen (105) des gesendeten Zeitwertes durch den einkanaligen ersten Teilnehmer (203, 401) und Ermitteln (107), ansprechend auf den Empfang, eines weiteren auf einem weiteren internen Zeitgeber des einkanaligen ersten Teilnehmers (203, 401) basierenden Zeitwertes (211), so dass zwei weitere Zeitwerten in dem einkanaligen ersten Teilnehmers (203, 401) vorliegen,
- Vergleichen (109) einer Differenz zwischen den beiden Zeitwerten des zweikanaligen zweiten Teilnehmers (205, 301) mit einer Differenz zwischen den beiden weiteren Zeitwerten des einkanalige ersten Teilnehmers (203, 401) durch den einkanaligen ersten Teilnehmer (203, 401), wobei der einkanalige erste Teilnehmer (203, 401) abhängig von dem Vergleich in einen Fehlerzustand geht (111).

2. Verfahren nach Anspruch 1, wobei die Zeitwerte des zweikanaligen zweiten Teilnehmers (205, 301) in einem vorgegebenen zeitlichen Abstand zu entsprechenden Sendezeitpunkten der Zeitwerte ermittelt werden.

3. Verfahren nach einem der vorherigen Ansprüche, wobei Safety-Protokoll das Safety-over-EtherCAT -Protokoll (221) ist.

4. Verfahren nach einem der vorherigen Ansprüche, wobei der zweikanalige zweite Teilnehmer (205, 301) unabhängig von einem Modulfehler, der einem an den zweikanaligen zweiten Teilnehmer (205, 301) angeschlossenen elektronischen Modul zugeordnet ist, die Zeitwerte an den einkanaligen ersten Teilnehmer (203, 401) sendet.

5. Überwachungssystem (201) mit einem ersten Teilnehmer (203, 401) und einem zweiten Teilnehmer (205, 301) in einem Kommunikationsnetzwerks (207),
wobei der erste Teilnehmer (203, 401) einkanalig mit einen Prozessor ausgebildet und ausgelegt ist, eine sicherheitsgerichtete Applikation auszuführen, wobei der zweite Teilnehmer (205, 301) zweikanalig mit zwei Prozessoren, die sich gegenseitig auf Fehlfunktionen überwachen, ausgebildet, und wobei eine Datenübertragung zwischen dem ersten und dem zweiten Teilnehmer auf dem Kommunikationsnetzwerk (207) über ein Safety-Protokoll erfolgt,
wobei der zweikanalige zweite Teilnehmer (205, 301) weiter einen internen Zeitgeber (219, 305) und eine Kommunikationsschnittstelle (303) umfasst, wobei der eine Prozessor (213, 215, 307) des zweikanalige zweiten Teilnehmers ausgebildet ist, basierend auf dem internen Zeitgeber (219, 305) einen Zeitwert (211) zu ermitteln, und wobei die Kommunikationsschnittstelle (303) ausgebildet ist, die ermittelten Zeitwerte an den einkanaligen ersten Teilnehmer (203, 401) über das Kommunikationsnetzwerk(207) zu senden,
wobei der erste Teilnehmer (203, 401) einen weiteren internen Zeitgeber (405) und eine weitere Kommunikationsschnittstelle (403) umfasst, wobei die Kommunikationsschnittstelle (403) ausgebildet ist, die Zeitwerte des zweikanaligen zweiten Teilnehmers (205, 301) über das Kommunikationsnetzwerk (207) zu empfangen, und wobei der Prozessor (223, 407) des einkanaligen ersten Teilnehmers ausgebildet ist, ansprechend auf einen jeweiligen Empfang der gesendeten Zeitwerte des zweikanaligen zweiten Teilnehmers (205, 301) jeweils einen weiteren auf dem weiteren internen Zeitgeber basierenden Zeitwert zu ermitteln und eine Differenz zwischen den beiden Zeitwerten des zweikanaligen zweiten Teilnehmers (205, 301) mit einer Differenz zwischen den beiden weiteren Zeitwerten des einkanaligen ersten Teilnehmers (203, 401) zu vergleichen, wobei der erste Teilnehmer (203, 401) ausgebildet ist, abhängig von dem Vergleich in einen Fehlerzustand zu gehen.

6. Überwachungssystem (201) nach Anspruch 5, wobei der eine Prozessor (213, 215, 307) des zweikanalige zweiten Teilnehmers ausgebildet ist, die Zeitwerte des zweikanaligen zweiten Teilnehmers (205, 301) in einem vorgegebenen zeitlichen Abstand zu entsprechenden Sendezeitpunkten der Zeitwerte zu ermittelt.

7. Überwachungssystem (201) nach Anspruch 5 oder 6, wobei Safety-Protokoll das Safety-over-EtherCAT -Protokoll (221) ist.

8. Überwachungssystem (201) nach einem der Ansprüche 5 bis 7, wobei der zweikanalige zweite Teilnehmer (205, 301) ausgelegt ist, unabhängig von einem Modulfehler, der einem an den zweikanaligen zweiten Teilnehmer (205, 301) angeschlossenen elektronischen Modul zugeordnet ist, die Zeitwerte an den einkanaligen ersten Teilnehmer (203, 401) zu senden.

## Claims

1. Method for monitoring a first node (203, 401) in a communications network (207) by a second node (205, 301), wherein the first node (203, 401) has a single-channel design and is designed to execute a safety-oriented application, wherein the second node (205, 301) has a dual-channel design, and wherein a safety protocol is used for a data transfer between the first node and the second node on the communications network (207), comprising the steps:
- determining (101) in the dual-channel second node at each of two consecutive time points a time value (211), which is based on an internal timer of the dual-channel second node (205, 301), and the dual-channel second node sending (103) each determined time value (211) to the single-channel first node (203, 401) via the communications network (207),
- the single-channel first node (203, 401) receiving (105) the sent time value and determining (107) in response to the receipt a further time value (211), which is based on a further internal timer of the single-channel first node (203, 401), with the result that two further time values are present in the single-channel first node (203, 401),
- the single-channel first node (203, 401) comparing (109) a difference between the two time values from the dual-channel second node (205, 301) with a difference between the two further time values from the single-channel first node (203, 401), wherein the single-channel first node (203, 401) goes into an error state (111) depending on the comparison.

2. Method according to Claim 1, wherein the time values from the dual-channel second node (205, 301) are determined at a defined time interval from the respective send times of the time values.

3. Method according to either of the preceding claims, wherein the safety protocol is the Safety over EtherCAT protocol (221).

4. Method according to any of the preceding claims, wherein the dual-channel second node (205, 301) sends the time values to the single-channel first node (203, 401) regardless of a module error associated with an electronic module connected to the dual-channel second node (205, 301).

5. Monitoring system (201) comprising a first node (203, 401) and a second node (205, 301) in a communications network (207),
wherein the first node (203, 401) has a single-channel design comprising a processor, and is designed to execute a safety-oriented application, wherein the second node (205, 301) has a dual-channel design comprising two processors, which monitor each other for malfunctions, and wherein a safety protocol is used for a data transfer between the first node and the second node on the communications network (207), wherein the dual-channel second node (205, 301) further comprises an internal timer (219, 305) and a communications interface (303), wherein the one processor (213, 215, 307) of the dual-channel second node is designed to determine a time value (211) on the basis of the internal timer (219, 305), and wherein the communications interface (303) is designed to send the determined time values to the single-channel first node (203, 401) via the communications network (207), wherein the first node (203, 401) comprises a further internal timer (405) and a further communications interface (403), wherein the communications interface (403) is designed to receive the time values from the dual-channel second node (205, 301) via the communications network (207), and wherein the processor (223, 407) of the single-channel first node is designed to determine, in response to each receipt of the sent time values from the dual-channel second node (205, 301), a further time value based on the further internal timer, and to compare a difference between the two time values from the dual-channel second node (205, 301) with a difference between the two further time values from the single-channel first node (203, 401), wherein the first node (203, 401) is designed to go into an error state depending on the comparison.

6. Monitoring system (201) according to Claim 5, wherein the one processor (213, 215, 307) of the dual-channel second node is designed to determine the time values from the dual-channel second node (205, 301) at a defined time interval from respective send times of the time values.

7. Monitoring system (201) according to Claim 5 or 6, wherein the safety protocol is the Safety over EtherCAT protocol (221).

8. Monitoring system (201) according to any of Claims 5 to 7, wherein the dual-channel second node (205, 301) is designed to send the time values to the single-channel first node (203, 401) regardless of a module error associated with an electronic module connected to the dual-channel second node (205, 301).

## Revendications

1. Procédé de surveillance d'un premier participant (203, 401) dans un réseau de communication (207) par un deuxième participant (205, 301),
le premier participant (203, 401) étant configuré à un canal et conçu pour exécuter une application orientée sécurité,
le deuxième participant (205, 301) étant configuré à deux canaux et un transfert de données entre le premier participant et le deuxième participant s'effectuant sur le réseau de communication (207) par l'intermédiaire d'un protocole de sécurité,
le procédé présentant les étapes suivantes :
- détermination (101) à chaque fois en deux instants successifs d'une valeur de temps (211) basée sur une horloge interne du deuxième participant (205, 301) à deux canaux dans le deuxième participant à deux canaux, et envoi (103) de la valeur de temps (211) respective déterminée par le deuxième participant à deux canaux au premier participant (203, 401) à un canal par l'intermédiaire du réseau de communication (207),
- réception (105) par le premier participant (203, 401) à un canal de la valeur de temps qui a été envoyée et en réponse à la réception, détermination (107) d'une autre valeur de temps (211) basée sur une autre horloge interne du premier participant (203, 401) à un canal, de telle sorte que deux autres valeurs de temps soient présentes dans le premier participant (203, 401) à un canal,
- comparaison, par le premier participant (203, 401) à un canal, (109) d'une différence entre les deux valeurs de temps du deuxième participant (205, 301) à deux canaux avec une différence entre les deux autres valeurs de temps du premier participant (203, 401) à un canal, le premier participant (203, 401) à un canal passant dans un état de défaut (111) en fonction de la comparaison.

2. Procédé selon la revendication 1, dans lequel les valeurs de temps du deuxième participant (205, 301) à deux canaux sont déterminées à un intervalle temporel prédéterminé par rapport aux instants d'émission des valeurs de temps-

3. Procédé selon l'une des revendications précédentes, dans lequel le protocole de sécurité est le protocole dit "Safety over EtherCAT" (221).

4. Procédé selon l'une des revendications précédentes, dans lequel le deuxième participant (205, 301) à deux canaux envoie les valeurs de temps au premier participant (203, 401) à un canal indépendamment d'une erreur de module associée à un module électronique raccordé au deuxième participant (205, 301) à deux canaux.

5. Système de surveillance (201) présentant un premier participant (203, 401) et un deuxième participant (205, 301) dans un réseau de communication (207),
le premier participant (203, 401) étant configuré à un canal avec un processeur et conçu pour exécuter une application orientée sécurité,
le deuxième participant (205, 301) étant configuré à deux canaux avec deux processeurs qui surveillent mutuellement leurs défauts de fonctionnement, un transfert de données entre le premier et le deuxième participant sur le réseau de communication (207) s'effectuant par l'intermédiaire d'un protocole de sécurité,
le deuxième participant (205, 301) à deux canaux comportant en outre une horloge interne (219, 305) et une interface de communication (303), un des processeurs (213, 215, 307) du deuxième participant à deux canaux étant configuré pour déterminer une valeur de temps (211) sur la base de l'horloge interne (219, 305), et l'interface de communication (303) étant configurée pour envoyer les valeurs de temps déterminées au premier participant (203, 401) à un canal par le biais du réseau de communication (207),
le premier participant (203, 401) comportant une autre horloge interne (405) et une autre interface de communication (403), l'interface de communication (403) étant configurée pour recevoir par l'intermédiaire du réseau de communication (207) les valeurs de temps du deuxième participant (205, 301) à deux canaux, et le processeur (223, 407) du premier participant à un canal étant configuré pour déterminer en réponse à une réception respective des valeurs de temps du deuxième participant (205, 301) à deux canaux à chaque fois une autre valeur de temps basée sur l'autre horloge interne et pour comparer une différence entre les deux valeurs de temps du deuxième participant (205, 301) à deux canaux et une différence entre les deux autres valeurs de temps du premier participant (203, 401) à un canal, le premier participant (203, 401) étant configuré pour passer dans un état de défaut en fonction de la comparaison.

6. Système de surveillance (201) selon la revendication 5, dans lequel un des processeurs (213, 215, 307) du deuxième participant à deux canaux est configuré pour déterminer les valeurs de temps du deuxième participant (205, 301) à deux canaux à un intervalle temporel prédéterminé par rapport à des instants d'émission correspondants des valeurs de temps.

7. Système de surveillance (201) selon la revendication 5 ou 6, dans lequel le protocole de sécurité est le protocole dit "Safety over EtherCAT" (221).

8. Système de surveillance (201) selon l'une des revendications 5 à 7, dans lequel le deuxième participant (205, 301) à deux canaux est conçu pour envoyer les valeurs de temps au premier participant (203, 401) à un canal indépendamment d'une erreur de module associée à un module électronique raccordé au deuxième participant (205, 301) à deux canaux.
